# EUROPÄISCHE PATENTSCHRIFT

(11) **EP 1 699 574 B1**
(45) Veröffentlichungstag und Bekanntmachung des Hinweises auf die Patenterteilung: **03.06.2009**
(21) Anmeldenummer: 04797987.7
(22) Anmeldetag: 18.11.2004
(51) Int. Cl.: B21B 31/07

(54) **VORRICHTUNG ZUM VORSPANNEN VON KEGELROLLENLAGERN EINER WALZWERKSWALZE**
DEVICE FOR PRE-STRESSING TAPERED ROLLER BEARINGS OF A ROLLING MILL ROLLER
DISPOSITIF POUR SOUMETTRE A UNE PRECONTRAINTE DES PALIERS CONIQUES A ROULEAUX D'UN CYLINDRE DE LAMINOIR

(30) Priorität: 16.12.2003 DE 10358869
(43) Veröffentlichungstag der Anmeldung: 13.09.2006
(73) Patentinhaber: SMS Demag AG, 40237 Düsseldorf (DE)
(72) Erfinder: GÜMPEL, Markus, 57537 Forst (DE); TAMMERT, Stefan, 57271 Hilchenbach (DE)
(74) Vertreter: Klüppel, Walter
(86) Internationale Anmeldenummer: PCT/EP2004/013104
(87) Internationale Veröffentlichungsnummer: WO 2005/061140

(56) Entgegenhaltungen:
- EP-A- 0 425 072
- US-A- 4 341 426
- US-A- 4 626 111

## Beschreibung

Die Erfindung betrifft eine Vorrichtung zum Vorspannen eines mit einem konischen Sitz auf einem sich verjüngenden Walzenzapfen von mittels Einbaustücken in einem Walzgerüst angeordneten Walzen, insbesondere Stützwalzen, befestigten Kegelrollenlagers durch Beaufschlagung mit Hydraulikdruck, wobei Lagerinnenring, Rollen und Lageraußenring des Kegelrollenlagers mit während des Walzens anstehenden Druck beaufschlagt und radial gegen die Walze verspannt werden.

Durch die EP 0 425 072 B1 ist eine solche Vorrichtung mit einem Kegelrollenlager und einem Konus für eine Walzwerkswalze bekanntgeworden. Der Konus weist mehrere nach außen weisende geneigte Laufflächen und mehrere Lageraußenringe mit geneigten Laufflächen auf. Um zu verhindern, dass die im Gegensatz zu den Lagerinnenringen nicht festgelegten Lageraußenringe mit den Kegelrollen vom Walzenzapfen abrutschen, wird das Kegelrollenlager mit Hilfe von vier Zugstangen, welche die Einbaustücke auf der Antriebs- und Bedienungsseite gegeneinander verspannen, vorgespannt. Dies wird unterstützt durch um die Zugstangen herum angeordnete Federn, die eine axial gerichtete Kraft ausüben; alternativ und/oder ergänzend hierzu sind fluid-betätigte Zylinder vorgesehen. Die für den Halt des hier insgesamt offenen Systems benötigten Zugstangen machen nicht nur eine aufwendigere Montage erforderlich, sondern führen aufgrund der für sie benötigten Durchgangsbohrungen auch zu Materialschwächungen.

Aus der DE 195 04 401 C1 ist es bekannt, ein Kegelrollenlager bei Verwendung einer hydraulischen Spannmutter oder eines mehrere hydraulisch miteinander verbundenen Kolben aufweisenden Lagereinstellringes bzw. Ringzylinders zunächst unter hohem Druck vorzuspannen und anschließend drucklos zu entspannen. Hierzu wird ein zwischengeschalteter Druckring von den Kolben mit diesen zugeordneten Distanzstücken gegen den Lagerinnenring beaufschlagt. Nach dem Vorspannen des Kegelrollenlagers werden die Distanzstücke bei druckloser, jedoch hydraulisch geschlossener Spannmutter oder hydraulisch geschlossenen Lagereinstellring entfernt. Im Ergebnis wird hiermit das Lagerspiel, d.h. das Spiel zwischen dem Lagerinnenring und dem Druckring eingestellt, indem der Lagereinstellring erst mit Druck beaufschlagt und dann drucklos entspannt wird, womit sich allerdings nicht verhindern lässt, dass im Kegellager selbst, d.h. zwischen Lagerinnenring und Anlagefläche am konischen Walzenzapfen ein Spiel einstellt.

Im Walzbetrieb hat sich gezeigt, dass bei den bekannten Kegelrollenlagern, in denen beide Enden der Walzen gelagert sind, unvermeidlich ein Rattern (Shattern) auftritt und die damit einhergehenden Vibrationen die Lagerlebensdauer verringern. Außerdem wird die Qualität des gewalzten Materials bei sehr hohen Walzgeschwindigkeiten negativ beeinflusst, wie auch die maximal mögliche Walzgeschwindigkeit nicht ausgenutzt werden kann. Die volle Produktionsleistung der Anlage kann somit nicht erreicht werden.

Der Erfindung liegt daher die Aufgabe zugrunde, eine Vorrichtung der eingangs genannten Art zu schaffen, die eine vibrationsfreie Walzenlagerung, insbesondere Stützwalzenlagerung, und damit eine längere Lagerlebensdauer ermöglicht und mit der sich die vorgenannten Nachteile vermeiden lassen.

Diese Aufgabe wird erfindungsgemäß dadurch gelöst, dass sich eine ringartige Druckbeaufschlagungseinrichtung über ein auf einem Walzen-Endzapfen vorgesehenes Axiallager an der Walze abstützt, mit Anlage zum Lageraußenring des Kegelrollenlagers angeordnet ist und bei Druckbeaufschlagung das Einbaustück mit dem Lageraußenring in Richtung auf den Walzenballen oder die Walze in entgegengesetzter Richtung verschiebt. Indem die Druckbeaufschlagungseinrichtung, vorteilhaft ein Ringzylinder mit zahlreichen untereinander hydraulisch verbundenen Einzelkolben, alternativ ein Ringkolben, auf dem Axiallager, z.B. Kegel- oder Pendelrollenlager, angeordnet ist und die Druckbeaufschlagung auf den Lageraußenring des Kegelrollenlagers mit Verschiebung entweder des Einbaustückes in Walzenlängsrichtung zum Walzenballen hin oder Verschiebung der Walze in entgegengesetzter Richtung, d.h. nach außen hin wirkt, lässt sich das Kegelrollenlager gegen die Walze radial verspannen, so dass in dem Kegelrollenlager kein Spiel mehr vorhanden ist. Die Lagerung ist damit weitestgehend vibrationsfrei.

Es wird vorgeschlagen, dass zur Übertragung der Druckkraft zwischen der Druckbeaufschlagungseinrichtung und dem Lageraußenring des Kegelrollenlagers ein Druckring vorgesehen ist, der sich nach einer Ausgestaltung der Erfindung als radialer Innenkragen einstückig mit dem Einbaustück ausbilden lässt.

Wenn die Druckbeaufschlagungseinrichtung und das Axiallager im Einbaustück angeordnet sind, ist das gesamte, an jeder Seite der Walze geschlossene, sich in sich selbst abstützende System von außen nicht sichtbar und geschützt untergebracht.

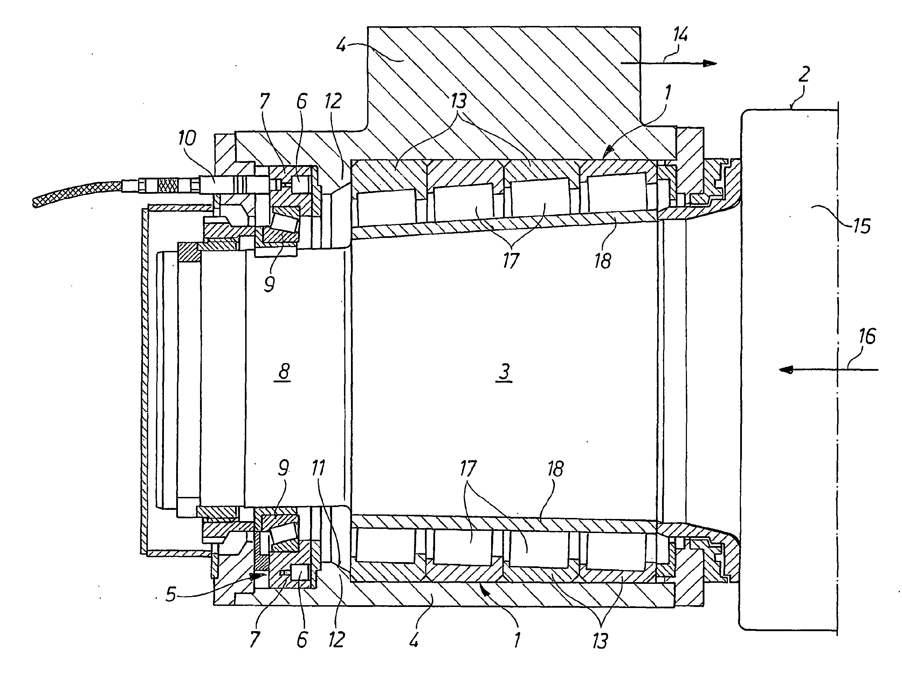

Weitere Merkmale und Einzelheiten der Erfindung ergeben sich aus den Ansprüchen und der nachfolgenden Beschreibung eines in der einzigen Zeichnung dargestellten Ausführungsbeispiels der Erfindung.

Von einem weiter nicht dargestellten, üblichen Walzgerüst zeigt die Zeichnung als Einzelheit in einem Teil-Längsschnitt ein Ende einer beidseitig jeweils in einem Kegelrollenlager 1 gelagerten Walze 2. Das mehrreihige Kegelrollenlager 1 ist mit konischem Sitz auf einem sich nach außen hin verjüngenden Walzenzapfen 3 vorgesehen und in einem Walzen-Einbaustück 4 angeordnet. An jeder Seite bzw. jedem Ende der Walze 2 ist im Walzen-Einbaustück 4 eine ringartige Druckbeaufschlagungseinrichtung 5 untergebracht, die hier als ein zahlreiche Einzelkolben 6 aufweisender Ringzylinder 7 ausgebildet ist und sich über ein auf einem zylindrischen Walzen-Endzapfen 8 angeordnetes Axialkegelrollenlager 9 gegen die Walze 2 abstützt. Der Ringzylinder 7 und damit dessen Einzelkolben 6 sind über einen Leitungsanschluß 10 an eine nicht gezeigte Druckmittelversorgungsquelle angeschlossen.

Der mit dem Axiallager 9 in einer Ausdrehung des Walzen-Einbaustückes 4 untergebrachte Ringzylinder 7 wirkt bei Druckbeaufschlagung seiner Einzelkolben 6 über einen Druckring 11, der hier als mit dem Walzen-Einbaustück 4 einstückiger radialer Innenkragen 12 ausgebildet ist, direkt auf den Lageraußenring 13 des Kegelrollenlagers 1 und bewirkt eine Verschiebung des Walzen-Einbaustückes 4 in Pfeilrichtung 14 zum Walzenballen 15 hin oder eine Verschiebung der Walze 2 in entgegengesetzter Richtung gemäß Pfeil 16. Der Lageraußenring 16 wird damit radial gegen die Walze 2 verspannt, womit das Kegelrollenlager 1 stets spielfrei ist, d.h. zwischen dem Lageraußenring 13, den Rollen 17 und dem Lagerinnenring 18 ist keine Luft mehr vorhanden. Die Rollen 17 finden im Lagerinnenring 18 stets eine Anlage mit einer großen Kontaktfläche.

Der Ringzylinder 7 wird permanent mit Druck beaufschlagt, so dass das Kegelrollenlager 1 während des gesamten Walzbetriebes spielfrei und gegen die Walze verspannt ist. Der somit nicht drucklos entspannte Ringzylinder 7 ermöglicht eine von der Walzkraft abhängige, dynamische Regelung. Die Walzenlagerung ist damit vibrationsfrei und gewährleistet eine hohe Lagerlebensdauer bei großer Walzgeschwindigkeit. Dies ermöglicht gleichzeitig eine Produktionssteigerung bei hoher Qualität des Walzgutes.

## Patentansprüche

1. Vorrichtung zum Vorspannen eines mit einem konischen Sitz auf einem sich verjüngenden Walzenzapfen (3) von mittels Einbaustücken (4) in einem Walzgerüst angeordneten Walzen (2), insbesondere Stützwalzen, befestigten Kegelrollenlagers (1) durch Beaufschlagung mit Hydraulikdruck, wobei Lagerinnenring (18), Rollen (17) und Lageraußenring (13) des Kegelrollenlagers mit während des Walzens anstehendem Druck beaufschlagt und radial gegen die Walze (2) verspannt werden,
**dadurch gekennzeichnet,**
**daß** sich eine ringartige Druckbeaufschlagungseinrichfiung (5) über ein auf einem Walzen-Endzapfen (8) vorgesehenes Axiallager (9) an der Walze (2) abstützt, mit Anlage zum Lageraußenring (13) des Kegelrollenlagers (1) angordnet ist und bei Druckbeaufschlagung das Einbaustück (4) mit dem Lageraußenring (13) in Richtung auf den Walzenballen (15) oder die Walze (2) in entgegengesetzter Richtung verschiebt.

2. Vorrichtung nach Anspruch 1,
**dadurch gekennzeichnet,**
**daß** die Druckbeaufschlagungseinrichtung (5) ein Ringzylinder (7) mit zahlreichen Einzelkolben (6) ist.

3. Vorrichtung nach Anspruch 1,
**dadurch gekennzeichnet,**
**daß** die Druckbeaufschlagungseinrichtung (5) ein Ringkolben ist.

4. Vorrichtung nach einem der Ansprüche 1 bis 3,
**dadurch gekennzeichnet,**
**daß** die Druckbeaufschlagungseinrichtung (5) und das Axiallager (9) im Einbaustück (4) angeordnet sind.

5. Vorrichtung nach einem der Ansprüche 1 bis 4,
**dadurch gekennzeichnet,**
**daß** zwischen der Druckbeaufschlagungseinrichtung (5) und dem Lageraußenring (13) des Kegelrollenlagers (1) ein Druckring (11) vorgesehen ist.

6. Vorrichtung nach Anspruch 5,
**dadurch gekennzeichnet,**
**daß** der Druckring (11) als radialer Innenkragen (12) einstückig mit dem Einbaustück (4) ausgebildet ist.

## Claims

1. Device for biasing a taper roller bearing (1), which is fastened by a conical seat on a tapering roll pin (3) of rolls (2), particularly backing rolls, arranged in a roll stand by means of chocks (4), by loading with hydraulic pressure, wherein bearing inner cage (18), rollers (17) and bearing outer cage (13) of the taper roller bearing are loaded with pressure occurring during rolling and radially tightened against the roll (2), **characterised in that** an annular pressure loading device (5) is supported on the roll (2) by way of an axial bearing (9) provided on a roll end pin (8), is arranged in contact with the bearing outer cage (13) of the taper roller bearing (1) and when loaded with pressure displaces the chock (4) together with the bearing outer cage (13) in direction towards the roll barrel (15) or the roll (2) in opposite direction.

2. Device according to claim 1, **characterised in that** the pressure loading device (5) is a ring cylinder (7) with numerous individual pistons (6).

3. Device according to claim 1, **characterised in that** the pressuring loading device (5) is a ring piston.

4. Device according to any one of claims 1 to 3, **characterised in that** the pressure loading device (5) and the axial bearing (9) are arranged in the chock (4).

5. Device according to any one of claims 1 to 4, **characterised in that** a pressure ring (11) is provided between the pressure loading device (5) and the bearing outer cage (13) of the taper roller bearing (1).

6. Device according to claim 5, **characterised in that** the pressure ring (11) is constructed as a radial inner collar (12) integral with the chock (4).

## Revendications

1. Dispositif pour mettre sous précontrainte un palier à rouleaux coniques fixé avec un siège conique sur un tenon de cylindre (3) en rétrécissement, appartenant à des cylindres (2) agencés au moyen de blocs d'insert (4) dans une cage de laminage, en particulier des cylindres de soutien, par alimentation avec une pression hydraulique, dans lequel la bague intérieure (18), les rouleaux (17) et la bague extérieure (13) du palier à rouleaux coniques sont sollicités par la pression apparaissant pendant le laminage et précontraints radialement contre le cylindre (2),
**caractérisé en ce qu'**un système d'alimentation de pression (5) de forme annulaire s'appuie contre le cylindre (2) via un palier axial (9) prévu sur un tenon d'extrémité (8) du cylindre, est agencé de façon à s'appuyer sur la bague extérieure (13) du palier à rouleaux coniques (1) et, lors de l'application d'une pression, déplace le bloc d'insert (4) avec la bague extérieure (13) du palier en direction du corps de cylindre (15), ou déplace le cylindre (2) en direction opposée.

2. Dispositif selon la revendication 1,
**caractérisé en ce que** le système d'alimentation de pression (5) est un cylindre annulaire (7) avec de nombreux pistons individuels (6).

3. Dispositif selon la revendication 1,
**caractérisé en ce que** le système d'alimentation de pression (5) est un piston annulaire.

4. Dispositif selon l'une des revendications 1 à 3,
**caractérisé en ce que** le système d'alimentation de pression (5) et le palier axial (9) sont agencés dans le bloc d'insert (4).

5. Dispositif selon l'une des revendications 1 à 4,
**caractérisé en ce qu'**il est prévu une bague de compression (11) entre le système d'alimentation de pression (5) et la bague extérieure (13) du palier à rouleaux coniques (1).

6. Dispositif selon la revendication 5,
**caractérisé en ce que** la bague de compression (11) est réalisée d'un seul tenant avec le bloc d'insert (4) sous forme d'un collet intérieur radial (12).
